**Europäisches Patentamt**

**European Patent Office**

**Office européen des brevets**

(19)

(11) Veröffentlichungsnummer: **0 339 036 B1**

(12) # EUROPÄISCHE PATENTSCHRIFT

(45) Veröffentlichungstag der Patentschrift:
30.10.91 Patentblatt 91/44

(51) Int. Cl.⁵: **A22C 17/04**

(21) Anmeldenummer: **88900442.0**

(22) Anmeldetag: **30.12.87**

(86) Internationale Anmeldenummer:
**PCT/AT87/00078**

(87) Internationale Veröffentlichungsnummer:
**WO 88/04892 14.07.88 Gazette 88/15**

(54) **VORRICHTUNG ZUM ABTRENNEN DES AN KNOCHEN ANHAFTENDEN FLEISCHES.**

(30) Priorität: **02.01.87 AT 4/87**
**05.02.87 AT 229/87**

(43) Veröffentlichungstag der Anmeldung:
**02.11.89 Patentblatt 89/44**

(45) Bekanntmachung des Hinweises auf die
Patenterteilung:
**30.10.91 Patentblatt 91/44**

(84) Benannte Vertragsstaaten:
**CH DE FR GB IT LI NL SE**

(56) Entgegenhaltungen:
**EP-A- 0 072 365**
**WO-A-83/00276**
**AT-B- 380 154**

(56) Entgegenhaltungen:
**DE-C- 86 411**
**FR-A- 2 356 375**
**US-A- 1 861 391**
**US-A- 2 336 982**

(73) Patentinhaber: **INJECT STAR**
**PÖKELMASCHINEN GESELLSCHAFT M.B.H.**
**Innstrasse 23**
**A-1201 Wien (AT)**

(72) Erfinder: **PROSENBAUER, Otto**
**Innstrasse 23**
**A-1201 Wien (AT)**

(74) Vertreter: **Brauneiss, Leo et al**
**Patentanwälte Dipl.-Ing. Leo Brauneiss,**
**Dipl.-Ing. Dr. Helmut Wildhack Landstrasser**
**Hauptstrasse 50 Postfach 281**
**A-1031 Wien (AT)**

## Beschreibung

Die Erfindung bezieht sich auf eine Vorrichtung zum Abtrennen des an Knochen anhaftenden Fleisches von diesen Knochen, durch Verpressen der fleischbehafteten Knochen in einem in einem Gestell angeordneten Preßraum mit vertikaler Achse, in den von unten ein Preßkolben einführbar ist und der an seinem oberen Ende durch ein Widerlager für die Verpressung verschließbar ist, wobei die Wand des Preßraumes Öffnungen für den Durchgang der durch den Preßdruck in pastenartigen Zustand übergeführten Fleischmasse hat, für die Knochen jedoch undurchlässig ist, und wobei die Wand des Preßraumes mittels eines Kolbens in dichtende Anlage an das Widerlager anhebbar ist.

Solche Vorrichtungen sind unter der Kurzbezeichnung "Separatoren" und aus der AT-B 380.154 bekannt. Die Befüllung des Preßraumes mit den fleischbehafteten Knochen erfolgt hiebei von oben und auch das nach der Verpressung verbleibende Knochenpaket wird nach oben mittels des Preßkolbens ausgeschoben. Diese Vorgänge setzen voraus, daß das Widerlager so verlagerbar ist, daß es das obere Stirnende des Preßraumes zwecks Einbringung der zu verpressenden Knochen bzw. zwecks Ausschubes des verpreßten Knochenpaketes freigibt. Nach Durchführung dieser Arbeitsgänge muß jedoch das Widerlager wieder in seine Arbeitsstellung gebracht werden, um während der Verpressung den Preßdruck aufnehmen zu können. Zweckmäßig erfolgt hiebei die Überführung des Widerlagers von seiner Arbeitsstellung in seine unwirksame Stellung bzw. wieder zurück durch Verschwenkung des Widerlagers um eine vertikale Achse. Um in der Arbeitsstellung des Widerlagers den Preßraum abzudichten, dient die Anhebung der Preßraumwand nach der Befüllung des Preßraumes und vor Beginn des Preßvorganges, wofür bei der eingangs erwähnten bekannten Vorrichtung ein eigenes hydraulisches Zylinderaggregat vorgesehen ist, dessen Kolben mit der Wand des Preßraumes verbunden ist. Nachteilig hieran ist jedoch der für dieses hydraulische Aggregat und dessen Steuerung erforderliche Aufwand.

Die Erfindung setzt sich zur Aufgabe, diesen Nachteil zu vermeiden und eine Vorrichtung der eingangs geschilderten Art so zu verbessern, daß der Aufwand verringert und auch die Betätigung der Vorrichtung vereinfacht und damit sicherer wird. Die Erfindung löst diese Aufgabe dadurch, daß der zur Anhebung der Wand des Preßraums dienende Kolben der Preßkolben ist, an dem diese Wand oder ein auf sie einwirkender Bauteil mit Reibungssitz anliegt. Die Erfindung geht hiebei von der Erkenntnis aus, daß es möglich sein muß, die bei der bekannten Konstruktion vorhandenen beiden hydraulischen Zylinderaggregate zu einem gemeinsamen Aggregat zu vereinen. Die gelingt durch die beschriebene Bauweise, bei welcher der Preßkolben durch Reibung die Wand des Preßraumes nach oben mitnimmt, so lange, bis am oberen Ende des Preßraumes diese Wand dichtend am Widerlager anliegt. Sodann setzt der Preßkolben seinen Hub fort, die Preßraumwand bleibt jedoch stehen und es beginnt der auf die fleischbehafteten Knochen zwecks Restfleischgewinnung einwirkende Preßvorgang. Sobald dieser Preßvorgang beendet ist und der Preßdruck weggenommen wird, bewegt sich der Preßkolben wieder nach unten. Der Preßraum bzw. dessen Wand folgen unter der Wirkung ihres Eigengewichtes nach unten bis in die Ausgangsstellung, wobei sich das obere Stirnende dieser Wand vom Widerlager löst, so daß dieses ausgeschwenkt werden kann, um für den anschließenden Auswerfvorgang die obere Preßraumstirnfläche freizugeben. Gegenüber der eingangs erwähnten bekannten Konstruktion entfällt ein komplettes hydraulisches Kolben-Zylinder-Aggregat samt dessen Steuerleitungen, was auch eine analoge Vereinfachung der Bedienung der Vorrichtung nach sich zieht.

Gemäß einer bevorzugten Ausführungsform der Erfindung ist die Wand des Preßraumes von einem Mitnahmering, insbesondere aus Kunststoff, geschoben, der den Preßkolben mit Reibungssitzs umgibt. Dies ist aus Toleranzgründen günstiger als die unmittelbare Mitnahme der Preßraumwand durch den Preßkolben. Die Verwendung eines Mitnahmeringes aus Kunststc" ergibt die Möglichkeit, durch die Wahl des Kunststc' materiales das gewünschte Reibungsverhalten einzustellen und eine Reibung Metall auf Metall zu vermeiden. Heibei ist es besonders vorteilhaft, wenn der Mitnanmering einen radialen Schlitz hat, also kein geschlossener Ring ist. Es wäre denkbar, den Ring hiebei mit seinen Ringpartien federnd am Prebkolben anliegen zu lassen, jedoch ist es noch günstiger, die Ringenden durch ein Spannorgan, z.B. eine Spannschraube, miteinander zu verbinden, wodurch sich die gewünschte Reibung leicht einstellen läßt.

Wie bereits erwähnt, ist es zweckmäßig, die Auwerfung des verpreßten Knochepaketes ebenfalls mittels des Preßkolbens durchzuführen. Hiezu ist im Rahmen der Erfindung mit der Außenwand des Preßraumes zumindest ein die Anhebung der Preßraumwand begrenzender Anschlag verbunden. Eine besonders güntige Ausführungsvariante besteht hiebei ergindungsgemäß darin, daß zwischen der Preßraumwand und dem Mitnahmering eine vom Preßkolben durchsetzte Lochplatte angeordnet ist, die mit ihrem Außenumfang zwischen zwei in Bewegungsrichtung des Preßkolbens in Abstand voneinander liegenden Anschlägen angeordnet ist, wobei dieser Abstand zumindest so groß ist wie die Hublänge der Preßraumwand. Um einseitige Beanspruchungen zu vermeiden, ist es zweckmäßig, mehrere solche Anschlagpaare im Umfangsrichtung der Preßraumwand verteilt vorzusehen.

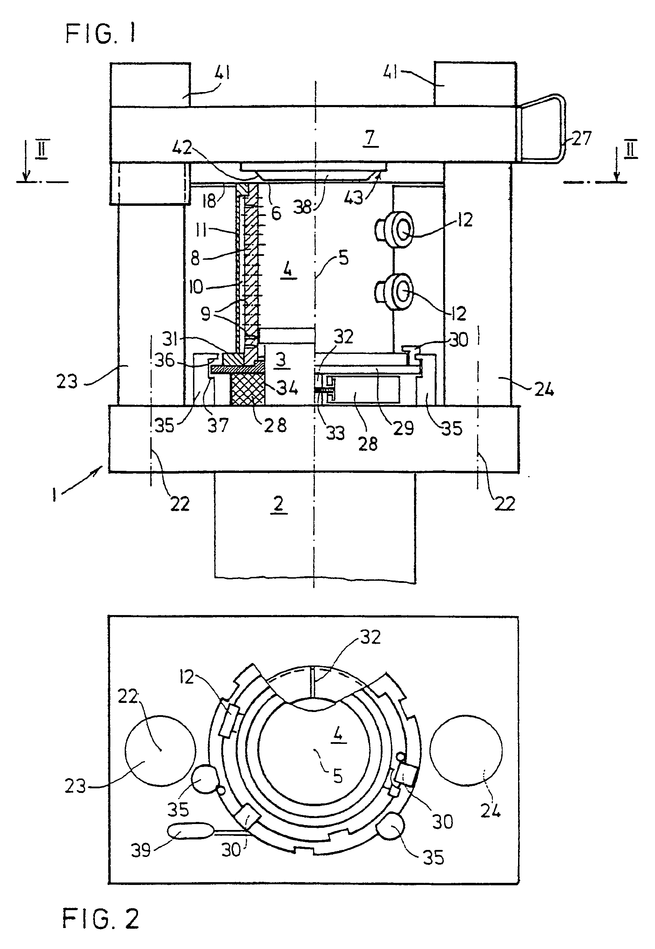

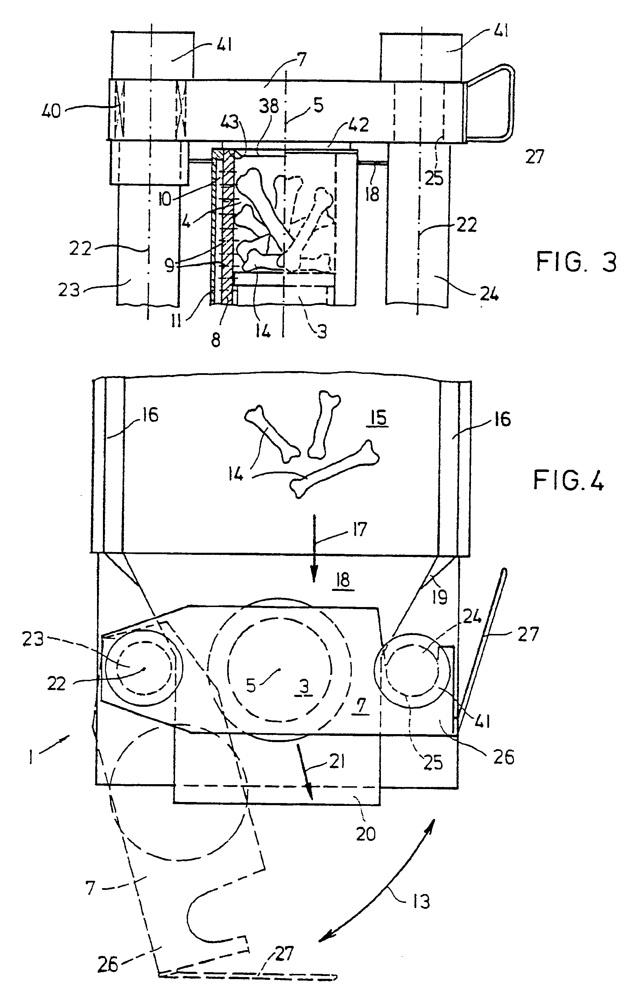

In der Zeichnung ist der Erfindungssgegenstand and Hand eines Ausführungsbeispeiles schematish veranchaulicht. Fig. 1 zeigt die wesentlichen Teile der Vorrichtung bei abgesenkter Preßraumwand in Seitenansicht, teilweise im Schnitt. Fig.2 ist ein Schnit nach der Linie II-II der Fig. 1, wobei einige Teile abgebrochen dargestellt sind. Fig.3 zeigt eine ähnliche Ansicht wie Fig.1, teilweise im Schnitt, jedoch bei an das widerlager angehobener Preßraumwand. Fig.4 zeigt in Draufsicht die Anordnung des Widerlagers.

Die Vorrichtung hat ein Gestell 1, in welchem ein hydraulischer Zylinder 2 ortsfest befestigt ist. Aus diesem Zylinder 2 ist ein Preßkolben 3 ausfahrbar, der in einen mit stehender Achse 5 im Gestell 1 angeordneten Preßraum 4 einfahrbar ist. Der mit kreiszylindrischem Querschnitt ausgebildete Preßraum 4 ist an seinem oberen Stirnende 6 durch ein Widerlager 7 für die Verpressung verschließbar. Die rohrförmige Wand 8 des Preßraumes 4 hat eine Vielzahl von Öffnungen 9 in Loch- oder Schlitzform, durch welche Öffnungen das durch den Preßdruck in pastenartigen Zustand übergeführte Fleish hindurchtreten kann. Für die knochen sind dieses Öffnungen 9 jedoch unpassierbar. Diese Wand 8 bildet daher mit ihren Öffnungen 9 ein Loch- oder Schlitzfilter zur Abtrennung der Fleischmasse von den knochen. Die Fleischmasse tritt durch die Öffnungen 9 in einen Ringraum 10 ein, der an seiner einen Seite von der Wand 8, an seiner anderer Seite von einem Mantelrohr 11 begrenzt wird. In diesem Ringraum 10 kann sich die Fleischmasse sammeln. Aus dem Ringraum tritt die Fleischmasse durch mehrere radial angeschlossene Auslässe 12 aus, an welche Schläuche angeschlossen sein können, die zu einer Auffangwanne führen.

Die Wand 8 des Preßraumes 4 ist begrenzt höhenverlagerbar, und zwar zwischen einer in Fig.1 dargestellten untersten Grenzlage und einer in Fig.3 dargestellten obersten Grenszlage. In der untersten Grenslage (Fig. 1) ist die Wand 8 so weit abgesenkt, daß das obere Stirnende 6 der Wand 8 tiefer liegt als das Widerlager 7 und ein von diesem nach unten vorstehender, zu Zentrierzwecken dienender Fortsatz 38, so daß das Widerlager 7 in Richtung des Doppelpfeiles 13 (Fig.4) ausgeschwenkt werden kann, um die zu verpressenden Knochen 14 (Fig.3) in den Preßraum 4 von oben her einbringen zu können. Zweckmäßig ist hiezu im Anschluß an das in dieser Lage befindliche Stirnende 6 des Preßraumes 4 eine horizontale oder geringfügig gegen den Preßraum zu geneigte Auflagefläche 15 (Fig.4) für die zu verpressenden Knochen vorgesehen, welche Fläche von einem Randwulst 16 begrenzt ist, damit die Knochen nicht unbeabsichtigt herunterfallen können. Auf dieser Auflagefläche 15 lassen sich die Knochen in Richtung des Pfeiles 17 (Fig.4) leicht von Hand gegen den Preßraum 4 schieben. Zweckmäßig ist mit dem Stirnende 6 des Preßraumes 4 ein Übergangsblech 18 verbunden, welches aufgebogen Ränder 19 haben kann, so daß die Knochen besser beim beschriebenen Einschiebevorgang zum Preßraum 4 geleitet werden. An der der Auflagefläche 15 gegenüberliegenden Seite kann dieses Übergangsblech 18 mit einer Rutsche 20 versehen sein, über welche die verpreßten Knochen nach ihrer Ausschiebung aus dem Preßraum 4 in Richtung des Pfeiles 21, etwa in einen Auffangbehälter, abgeführt werden können.

Das Widerlager 7 ist von einem horizontalen Querstück gebildet, das um eine vertikale Achse 22 (Fig.3,4) verschwenkbar ist. Diese Achse 22 ist zweckmäßig die Symmetrieachse einer Säule 23, an der das Widerlager 7 mittels eines Lagers 40 in einer Horizontalebene schwenkbar gelagert ist. Eine gleichartige Säule 24 ist an der anderen Seite der Vorrichtung vorgesehen und hat eine Ausnehmung 25, die in der wirksamen Stellung des Widerlagers 7 von dessen hakenförmig ausgebildetem freien Ende 26 umgriffen wird. Dieses Ende 26 ist mit einem Betätigungsgriff 27 versehen, der gleichzeitig als Verriegelungsorgan zur Blockierung des Widerlagers 7 in seiner in Fig.4 mit vollen Linien gezeichneten wirksamen Stellung dienen kann. Aus dieser Stellung läßt sich das Widerlager 7 in die strichliert gezeichnete unwirksame Stellung ausschwenken bzw. wieder zurückschwenken. Die Säulen 23,24 nehmen bei der Verpressung den Preßdruck auf, sind entsprechend stark bemessen und sind mit verbreiterten Köpfen 41 versehen, um ein Abziehen des Widerlagers 7 zu verhindern.

Zur erwähnten Anhebung bzw. Absenkung des Preßraumes 4 bzw. seiner Wand 8 dient ein Mitnahmering 28 aus Kunststoff, z.B. Polyäthylen, an dem oben eine Lochplatte 29 anliegt, die ihrerseits mit der Wand 8 bzw. dem Mantelrohr 11 fest verbunden ist. Zweckmäßig sind hiezu an der Lochplatte 29 mehrere, über ihren Umfang verteilte Klemmstücke 30 angeordnet, die einen Flansch 31 des unteren Stirnendes des Mantelrohres 11 übergreifen. Der Mitnahmering 28 hat einen radialen Schlitz 32, der den Ring völlig durchtrennt. Die beiden einander benachbarten Ringenden werden durch ein von einer Spannschraube 33 (Fig.1) gebildetes Klemmorgan zusammengehalten. Durch Verstellung der Spannschraube 33 läßt sich die Reibung, mit welcher der Mitnahmering 28 an der Wand 34 des Preßkolbens 3 anliegt, nach Wunsch einstellen.

Entlang des Außenumfanges des Lochplatte 29 sind mehrere Anschlagträger 35 ortsfest angeordnet, deren jeder zwei in Bewegungsrichtung der Lochplatte 29 in Abstand voneinander liegende Anschläge 36,37 trägt, deren einer (36) oberhalb der Lochplatte 29 liegt, der andere (37) unterhalb. Der Abstand der Anschläge 36,37 voneinander ist zumindest so groß wie, vorzugsweise etwas größer als die Hublänge der Wand 8 des Preßraumes 4. Diese Anschläge 36,37 bilden Begrenzungen für die Bewegung der Wand 8.

Im Betrieb der Vorrichtung wird bei völlig abgesenkter Wand 8 des Preßraumes 4 das Widerlager 7 in die in Fig.4 strichliert dargestellte unwirksame Stellung ausgeschwenkt, und zwar in Richtung von der Auflage-fläche 15 weg. In die so freigelegte obere Öffnung des Preßraumes 4 können dann die zu verpressenden fleischbehafteten Knochen 14 in Richtung des Pfeiles 17 (Fig.4) eingeschoben werden. Sohalb der Preßraum 4 genügend gefüllt ist, wird das Widerlager 7 in Richtung des Pfeiles 13 zurückgeschwent, bis es in die in Fig.4 voll eingezeichnete wirksame Stellung gelangt. Nach Verriegelung in dieser Lage mittels des Handgriffes 27 wird die hydraulische Steuerung so betätigt, daß der Preßkolben 3 im Zylinder 2 angehoben wird. Durch den reibungsschlüssig mit ihm verbundenen Mitnahmering 28 werden hiebei auch die Lochplatte 29, die Preßraumwand 8 und das Mantelrohr 11 nach oben mitgenommen, bis das obere Stirnende 6 der Preßraumwand 8 am Widerlager 7 dichtend anliegt. Zu Zentrierwecken ist das vom Querstück gebildete Widerlager 7 mit einem den Verschlußteil 43 für den Preßraum 4 bildenten Fortstatz 38 mit konischer Mantelfläche 42 versehen, welcher bei der Anhebung des Preßraumes 4 in dessen oberes Ende eintritt. Sobald das obere Stirnende 6 der Preßraumwand 8 an diesem Verschlußteil 43 dichtend anliegt, ist der Preßraum 4 nach oben dicht abgeschlossen und eine weitere Verschiebung der Preßraumwand 8 nach oben kann nicht stattfinden. Bei der weiteren Bewegung des Preßkolben 3 nach oben bleibt daher der Mitnahmering 28 stehen und es beginnt die Verpressung der Knochen 14, wobei die Fleischmasse durch die Öffnungen 9 in den Ringraum 10 ein und aus diesem durch die Auslässe 12 austritt. Sobald die Knochen 14 genügend verpreßt sind, wird der Zylinder 2 umgesteuert, so daß der Preßkolben 3 nach abwärts bewegt wird. Am Beginn dieser Abwärtsbewegung nimmt der Preßkolben 3 den Mitnahmering 28 mit. Die Preßraumwand 8 zusammen mit der Lochplatte 29 und das Mantelrohr 11 folgen dieser Bewegung unter Einfluß ihres Eigengewichtes, bis die Lochplatte 29 am unteren Anschlag 37 anstößt. Der Preßkolben 3 wird sodann noch etwas zurückgezogen, wobei die Wand 8 stehenbleibt. Sodann kann nach Lösen der Verriegelung das Widerlager 7 wieder in die in Fig.4 strichliert dargestellte unwirksame Stellung ausgeschwenkt werden. Sobald dies erfolgt ist, wird der Preßkolben 3 durch entsprechende Ansteuerung des Zylinders 2 neuerlich angehoben, wobei er am Beginn dieser Anhebebewegung die Wand 8 nach oben mitnimmt, bis die Lochplatte 29 am oberen Anschlag 36 anschlägt. Sobald dies der Fall ist, verschiebt sich der Preßkolben 3 relativ zur Wand 8 nach oben und schiebt die von den verpreßten Knochen 14 gebildete Rückstandsmasse aus dem Stirnende 6 des Preßraumes 4 nach oben aus, worauf diese Masse abgeführt wird. Sodann wird der Preßkolben 3 wieder zurückgezogen und nimmt die Wand 8 in die untere Ausgangsstellung mit. Solbab der Preßkolben 3 seine unterste Lage erreicht hat, ist der Arbeitszyklus vollendet und der Preßraum 4 kann neuerlich mit zu verpressenden Knochen 14 Gefüllt werden.

Die Spannschraube 33 ist zweckmäßig mit einem seitlich vom Mantelrohr 11 abstehenden Handgriff 39 zur leichteren Betätigung versehen.

## Patentansprüche

1. Vorrichtung zum Abtrennen des an Knochen anhaftenden Fleisches von diesen Knochen, durch Verpressen der fleischbehafteten Knochen in einem in einem Gestell (1) angeordneten Preßraum (4) mit vertikaler Achse (5), in den von unten ein Preßkolben (3) einführbar ist und der an seinem oberen Ende durch ein Widerlager (7) für die Verpressung verschließbar ist, wobei die Wand (8) des Preßraumes (4) Öffnungen (9) für den Durchgang der durch den Preßdruck in pastenartigen Zustand übergeführten Fleischmasse hat, für die Knochen jedoch undurchlässig ist, und wobei die Wand (8) des Preßraumes (4) mittels eines Kolbens in dischtende Anlage an das Widerlager (7) anhebbar ist, dadurch gekennzeichnet, daß der zur Anhebung der Wand (8) des Preßraumes (4) dienende Kolben der Preßkolben (3) ist, an dem diese Wand (8) oder ein auf sie einwirkender Bauteil mit Reibungssitz anliegt.

2. Vorrichtung nach Anspruch 1, dadurch gekennzeichnet, daß die Wand (8) von einem den Bauteil bildenten Mitnahmering (28) geschoben wird, der den Preßkolben (3) mit Reibungssitz umgibt.

3. Vorrichtung nach Anspruch 2, dadurch gekennzeichnet, daß der Mitnahmering (28) zumindest einen radialen Schlitz (32) hat.

4. Vorrichtung nach Anspruch 3, dadurch gekennzeichnet, daß die durch den Schlitz getrennten Ringenden bzw. Ringsektoren durch zumindest ein Spannorgan, z.B. eine Spannschraube (33), miteinander verbunden sind.

5. Vorrichtung nach einem der Ansprüche 1 bis 4, dadurch gekennzeichnet, daß zur Begrenzung der Anhebung bzw. Absenkung der Wand (8) Anschläge (36 bzw.37) vorhanden sind.

6. Vorrichtung nach Anspruch 5, dadurch gekennzeichnet, daß zwischen der Wand (8) und dem Mitnahmering (28) eine vom Preßkolben (3) durchsetzte Lochplatte (29) angeordnet ist, die mit ihrem Außenumfang zwischen zwei in Bewegungsrichtung des Preßkolbens (3) in Abstand voneinander liegenden Anschlägen (36,37) angeordnet ist, wobei dieser Abstand zumindest so groß ist wie die Hublänge der Wand (8).

7. Vorrichtung nach Anspruch 6, dadurch gekennzeichnet, daß mehrere solche Anschlagpaare (36,37) in Umfangsrichtung der Wand (8) des Preßraumes (4) verteilt vorgesehen sind.

## Claims

1. Device for separating the meat adhering to bones from these bones by compressing the meat-laden bones in a compressing chamber (4) with a vertical axis (5) disposed in a frame (1), into which chamber a press plunger (3) may be introduced from beneath and which may be sealed for the compressing process at its top end by an abutment (7), wherein the wall (8) of the compressing chamber (4) has openings (9) for the meat material, conveyed in a paste-like state by means of the compressing pressure, to pass through, but which is impermeable to the bones, and wherein the wall (8) of the compressing chamber (4) may be raised by means of a plunger to fit against the abutment (7) forming a seal, characterised in that the plunger which serves to raise the wall (8) of the compressing chamber (4) is the press plunger (3) against which this wall (8) or a component part acting thereon abuts with a friction fit.

2. Device according to claim 1, characterised in that the wall (8) is pushed by a friction ring (28) constituting the component part and surrounding the press plunger (3) with a friction fit.

3. Device according to claim 2, characterised in that the friction ring (28) has at least one radial slit (32).

4. Device according to claim 3, characterised in that the ring ends or ring sectors separated by the slit are connected to one another by at least one clamping element, e.g. a tightening screw (33).

5. Device according to one of claims 1 to 4, characterised in that stops (36 or 37) are present to limit the rise or fall of the wall (8).

6. Device according to claim 5, characterised in that arranged between the wall (8) and the friction ring (28) is a perforated plate (29) through which the press plunger (3) passes, arranged with its outer periphery between two stops (36, 37) spaced apart from one another in the direction of movement of the press plunger (3), this space apart being at least as great as the lifting distance of the wall (8).

7. Device according to claim 6, characterised in that there are provided several such pairs of stops (36, 37), distributed in the peripheral direction of the wall (8) of the compressing chamber (4).

## Revendications

1. Dispositif pour détacher la viande adhérant sur des os, en comprimant les os chargés de viande dans une chambre de pression (4) à axe vertical (5), qui est disposée dans un bâti (1), dans laquelle peut être introduite par le bas un piston de pression (3), et qui peut être fermée à son extrémité supérieure par un élément de contre-appui (7) en vue de la compression, la paroi (8) de la chambre de pression (4) possédant des ouvertures (9) pour le passage de la masse de viande transformée en un état pâteux par la force de pression, mais ne laissant pas passer les os, et la paroi (8) de la chambre de pression (4) pouvant être levée en application hermétique contre l'élément de contre-appui (7) au moyen d'un piston, caractérisé en ce que le piston servant à lever la paroi (8) de la chambre de pression (4) est le piston de pression (3), contre lequel s'applique en contact de friction cette paroi (8) ou un élément constructif agissant sur elle.

2. Dispositif selon la revendication 1, caractérisé en ce que la paroi (8) est poussée par une bague entraîneuse (28) qui constitue l'élément constructif et qui entoure en contact de friction le piston de pression (3).

3. Dispositif selon la revendication 2, caractérisé en ce que la bague entraîneuse (28) possède au moins une fente radiale (32).

4. Dispositif selon la revendication 3, caractérisé en ce que les extrémités ou secteurs de bague séparés par la fente sont mutuellement reliés par au moins un organe de serrage, par exemple une vis de serrage (33).

5. Dispositif selon l'une des revendication 1 à 4, caractérisé en ce que des butées (36 ou 37) sont prévues pour limiter respectivement le levape ou l'abaissement de la paroi (8).

6. Dispositif selon la revendication 5, caractérisé en ce qu'une plaque perforée (29) traversée par le piston de pression (3) est disposée entre la paroi (8) et la bague entraîneuse (28), plaque dont la périphérie extérieure est disposée entre deux butées (36, 37) mutuellement distantes dans le sens de déplacement du piston de pression (3), cette distance étant au moins égale à la course de la paroi (8).

7. Dispositif selon la revendication 6, caractérisé en ce que plusieurs paires de butées (36, 37) sont disposées réparties dans le sens périphérique de la paroi (8) de la chambre de pression (4).

FIG. 1

FIG. 2

FIG. 3

FIG.4